# EUROPÄISCHE PATENTSCHRIFT

(11) **EP 2 491 258 B1**
(45) Veröffentlichungstag und Bekanntmachung des Hinweises auf die Patenterteilung: **09.11.2016**
(21) Anmeldenummer: 10763336.4
(22) Anmeldetag: 27.09.2010
(51) Int. Cl.: F16B 25/10

(54) **BOHRSCHRAUBE**
DRILLING SCREW
VIS PERCEUSE

(30) Priorität: 23.10.2009 DE 102009045951
(43) Veröffentlichungstag der Anmeldung: 29.08.2012
(73) Patentinhaber: SWG Schraubenwerk Gaisbach GmbH, 74638 Waldenburg (DE)
(72) Erfinder: STIEBITZ, Günter, 74638 Waldenburg (DE)
(74) Vertreter: Patentanwälte Ruff, Wilhelm, Beier, Dauster & Partner mbB
(86) Internationale Anmeldenummer: PCT/EP2010/064249
(87) Internationale Veröffentlichungsnummer: WO 2011/047933

(56) Entgegenhaltungen:
- EP-A1- 1 445 498
- FR-A- 1 428 786
- FR-A1- 2 238 081
- FR-A5- 2 205 129
- GB-A- 1 003 888
- US-A- 4 583 898
- US-A- 4 645 396

## Beschreibung

Die Erfindung geht aus von einer Bohrschraube.

Bohrschrauben sind seit langem bekannt. Sie haben den Vorteil, dass man ohne vorzubohren in Holz oder holzähnliches Material einschrauben kann.

Es gibt selbstbohrende Schrauben, die eine echte Schraubenspitze aufweisen. Hier versucht man, damit die Schraube möglichst schnell den Vorschub selbst erzeugt, das Schraubengewinde bis an die Spitze selbst auszubilden.

Bei etwas härteren Materialien, beispielsweise beschichteten Platten aus holzähnlichem Material, verwendet man auch Bohrschrauben mit einer Schneiden aufweisenden Spitze, die ein Loch bohrt. Dieses Loch muss natürlich kleiner sein als der Außendurchmesser des Gewindes der Schraube.

Es hat sich nun herausgestellt, dass beim Einschrauben, insbesondere in beschichtete Platten, die Gefahr besteht, dass die obere Schicht der Platte, beispielsweise die Beschichtung, abgehoben wird. Dies kann unter Umständen zu unschönen Ergebnissen führen.

Es ist bereits eine Schraube bekannt (GB 1003888: Figur 6), bei der hinter der Bohrspitze eine Einschnürung vorhanden ist. Mit dieser Schraube wird in einem Blech ein Loch gebohrt, das deutlich kleiner ist als der Kerndurchmesser des Schraubenschafts.

Ebenfalls bekannt sind Flügelbohrschrauben, bei denen an der Bohrspitze seitliche Schneidflügel vorhanden sind, die das Loch der Bohrspitze vergrößern und beim Auftreffen auf Metall abbrechen (EP 1445498 A1, US 4645396).

Weiterhin bekannt ist eine Schraube mit einer Bohrspitze zum Bohren eines Lochs und mit Abstand hinter der Bohrspitze angeordneten seitlichen Schneiden zum Vergrößern des bereits hergestellten Lochs. In die Wandung des vergrößerten Lochs wird dann ein Gewinde eingeschnitten (FR 2 238 081).

Der Erfindung liegt die Aufgabe zu Grunde, eine Bohrschraube zu schaffen, die auch unter ungünstigen Bedingungen zu einem schnellen Einschrauben ohne die Gefahr des Abhebens der oberen Schicht der Platte, in die die Schraube eingeschraubt wird, führt.

Zur Lösung dieser Aufgabe schlägt die Erfindung eine Bohrschraube mit den im Anspruch 1 genannten Merkmalen vor. Weiterbildungen der Erfindung sind Gegenstand von Unteransprüchen.

Die Bohrschraube erzeugt zunächst mit ihrer Bohrspitze ein Loch in der Oberfläche der Platte. Erst dann, wenn dieses Loch eine gewisse Tiefe erreicht hat, gelangt das Gewinde in Eingriff mit dem Rand des Lochs. An dieser Stelle hat das Gewinde aber noch nicht seine endgültige Ausformung beziehungsweise seinen endgültigen Außendurchmesser. Es besteht daher nicht mehr die Gefahr, dass das Gewinde die Oberfläche abhebt. Es ist dabei zu berücksichtigen, dass der Vorschub bei einer Bohrspitze zunächst kleiner ist als es der Steigung des Gewindes entspricht.

In Weiterbildung der Erfindung ist vorgesehen, dass der radiale Abstand der Gewindekante von dem Beginn des Gewindes ausgehend über ein bis zwei Windungen des Gewindes bis zu dem endgültigen Außendurchmesser zunimmt.

Erfindungsgemäß ist vorgesehen, dass hinter der Bohrspitze eine Einschnürung ausgebildet ist, in der der Durchmesser der Schraube kleiner ist als es der Bohrspitze entspricht, also kleiner als das Loch, das durch die Bohrspitze erzeugt wird.

Hier schlägt die Erfindung nun vor, dass das Gewinde innerhalb dieser Einschnürung beginnt. Dies führt dazu, dass das Gewinde mit dem Material, in das die Schraube eingeschraubt wird, zuerst mit der Wand des bereits hergestellten Sacklochs in Kontakt tritt, und zwar auch mit einem Abstand von der Oberfläche der Platte.

Die Einschnürung kann insbesondere unsymmetrisch ausgebildet sein, beispielsweise in der Art, dass eine in Richtung auf den Schraubenkopf gerichtete Schulter vorhanden ist, und dass von dem Ende der Schulter ausgehend sich der Durchmesser kegelförmig in Richtung auf den Schraubenkopf langsam erweitert. Dies macht die Ausbildung des im Durchmesser zunehmenden Gewindes besonders sinnvoll.

In nochmaliger Weiterbildung der Erfindung kann vorgesehen sein, dass der radiale Abstand der Gewindekante von der Längsachse der Schraube am Beginn des Gewindes kleiner oder gleich als der Durchmesser des von der Bohrspitze zu erzeugenden Lochs ist. Das Gewinde gelangt also erst innerhalb des Lochs mit Abstand von der Oberfläche der Platte mit der Wand des Lochs in Kontakt.

Die späteren Gewindewindungen erweitern das Gewinde in der Wand des Lochs dann allmählich. Auf diese Weise wird die Gefahr des Abhebens von Spänen an der Oberfläche der Platte oder auch einer Beschichtung an der Oberfläche der Platte ausgeschlossen.

Vor den Schneiden der Bohrspitze sind Freiflächen gebildet, die dazu dienen, die bei dem Bohren entstehenden Späne abzuführen. Erfindungsgemäß kann nun in Weiterbildung vorgesehen sein, dass die Freifläche vor der Schneide bis in den Bereich der Einschnürung und gegebenenfalls ein Stück weiter reicht.

Da die Bohrspitze der Schraube durch einen Kaltumformungsvorgang hergestellt wird, schlägt die Erfindung in Weiterbildung vor, dass die Freifläche vor der Schneide der Bohrspitze in einer Längsmittelebene der Schraube liegt.

Erfindungsgemäß kann die Schraube einen Senkkopf vorzugsweise mit Frästaschen an seiner Unterseite aufweisen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Senkkopfschraube nach der Erfindung;
- Figur 2: in vergrößertem Maßstab eine Stirnansicht der Schraube von unten in Figur 1;
- Figur 3: in einem gegenüber der Figur 1 vergrößerten Maßstab die Bohrspitze aus einer ersten Richtung;
- Figur 4: eine Ansicht des vorderen Endes der Schraube aus einer gegenüber der Figur 3 um 90° versetzten Richtung.

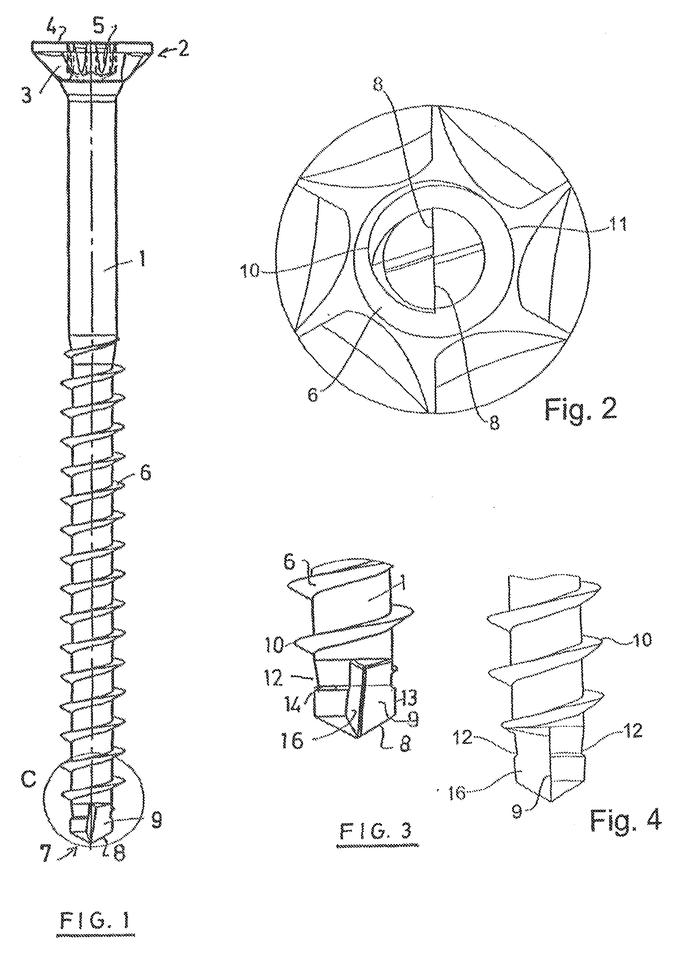

In Figur 1 ist eine Bohrschraube nach der Erfindung dargestellt. Die Bohrschraube enthält einen Schaft 1, an dessen einem Ende ein Schraubenkopf 2 ausgebildet ist. Es handelt sich bei diesem Schraubenkopf um einen Senkkopf mit Frästaschen 3 an seiner Unterseite. Von der ebenen Stirnfläche 4 des Schraubenkopfs 2 ausgehend führt eine Schraubenantriebsvertiefung 5 in den Schraubenkopf 2 hinein.

Der Schraubenschaft 1 weist einen ersten von der Unterseite des Schraubenkopfs 2 ausgehenden Bereich ohne Gewinde und einen zweiten Bereich mit einem Gewinde 6 auf. An dem dem Schraubenkopf 2 abgewandten Ende des Schraubenschafts 1 ist eine Bohrspitze 7 gebildet, die in Figur 1 aus einer ersten Richtung zu sehen ist. Die Bohrspitze 7 weist zwei Bohrschneiden 8 auf. Vor jeder Bohrschneide 8 ist eine Freifläche 9 gebildet, die zum einen die Schneide 8 bildet und zum anderen den Abtransport von beim Bohren entstandenen Spänen ermöglicht. Der Außendurchmesser der Bohrspitze 7 entspricht dem Kerndurchmesser des Schraubengewindes 6.

Aus der die Bohrspitze von vorne darstellenden Figur 2 ist zu sehen, dass zwei solche Bohrschneiden 8 vorhanden sind, die in der Stirnansicht zumindest angenähert auf einer Linie liegen. Unmittelbar an der vor der unteren Bohrschneide 8 liegenden Freifläche 9 beginnt das Gewinde 6. Es hat dort einen Abstand von der Schraubenlängsachsen, der angenähert dem Durchmesser des durch die Bohrspitze 8 zu bohrenden Lochs entspricht. Die Gewindekante 10 liegt auf einer Spirale, die sich innerhalb etwa eines Umlaufs bis in den Außendurchmesser 11 des Gewindes 6 erweitert.

Die Figur 3 zeigt nun die Bohrspitze in einem gegenüber der Figur 1 vergrößerten Maßstab. Mit einem Abstand von dem Schnittpunkt der beiden Bohrschneiden 8, der etwas kleiner als der Durchmesser der Schraube ist, schnürt sich der Querschnitt der Schraube ein und bildet dort eine Einschnürung 12. Hinter der Nebenschneide 13 der Bohrspitze 7 wird dadurch eine fast quer zur Längsachse verlaufende Schulter 14 gebildet, von der aus sich dann der Querschnitt des Schraubenschafts kegelförmig allmählich wieder dem vollen Durchmesser des Schraubenschafts 1 beziehungsweise dem Kerndurchmesser des Gewindes 6 annähert.

Innerhalb dieser Einschnürung 12 beginnt das Gewinde 6. Es beginnt mit einer Stirnfläche, die in einer Ebene mit der Freifläche 9 liegt. Man könnte dies auch als einen Zahn bezeichnen. Nach einer halben Umdrehung ist der radiale Abstand der Gewindekante 10 von der Längsachse der Schraube schon deutlich größer geworden, hat aber noch nicht den Außendurchmesser 11 des Gewindes 6 erreicht. Dies geschieht erst im weiteren Verlauf der Gewindekante, siehe Figur 2.

Die durch die Freifläche 9 gebildete Spankerbe wird von einer zweiten Fläche 16 begrenzt, die ebenfalls eben ausgebildet ist, wobei der Winkel zwischen den beiden Flächen 9, 16 etwas größer als ein rechter Winkel ist.

Die Figur 4 zeigt nun das vordere Ende der Schraube aus einer um 90° versetzten Richtung, von links in Figur 3. Hier ist ebenfalls die Einschnürung 12 deutlich zu sehen. Ebenfalls ist hier zu sehen, wie sich die Gewindekante 10 des Gewindes 6 allmählich dem endgültigen Außendurchmesser 11 des Gewindes 6 annähert.

Eine Bohrschraube enthält an ihrem vorderen dem Schraubenkopf abgewandten Ende eine Bohrspitze mit zwei Bohrschneiden. Mit einem axialen Abstand von den Bohrschneiden weist der Schraubenschaft eine Einschnürung auf, innerhalb der der Durchmesser des Schraubenschafts kleiner ist als der Durchmesser des Lochs, den die Bohrspitze erzeugt. Die Einschnürung ist derart ausgebildet, dass sie eine fast quer zur Längsachse verlaufende dem Schraubenkopf zugewandte Schulter aufweist, von der aus sich der Durchmesser allmählich wieder dem Kerndurchmesser des Schafts annähert. Innerhalb dieser Einschnürung beginnt das Gewinde, wobei die Gewindekante von der Längsachse der Schraube zunächst einen Abstand aufweist, der etwa dem Radius des Lochs entspricht. Die Gewindekante verläuft dann längs einer Spirale bis zu dem endgültigen Außendurchmesser des Gewindes auf dem Schaft.

## Patentansprüche

1. Bohrschraube für Holz oder holzähnliches Material, mit
1.1 einem Schraubenschaft (1),
1.2 einer an dem vorderen Ende des Schraubenschafts (1) ausgebildeten Bohrspitze (7) mit zwei in der Stirnansicht zumindest angenähert auf einer Linie liegenden Schneiden (8),
1.3 einer hinter der Bohrspitze (7) ausgebildeten Einschnürung (12),
1.4 einem Schraubengewinde (6), das
1.5 mit axialem Abstand hinter den Schneidkanten (8) beginnt und
1.9 bei dem der radiale Abstand der Gewindekante (10) von der Längsachse der Schraube von einem Beginn des Gewindes (6) aus über eine halbe bis zwei Windungen zunimmt, wobei
1.10 der Durchmesser der Schraube in der Einschnürung (12) kleiner ist als das durch die Bohrspitze (7) gebildete Loch und kleiner als der Kerndurchmesser des Schraubenschafts (1) und
1.11 der Außendurchmesser der Bohrspitze (7) dem Kerndurchmesser des Schraubengewindes (6) entspricht.

2. Bohrschraube nach Anspruch 1, bei der das Gewinde (6) innerhalb der Einschnürung (12) beginnt.

3. Bohrschraube nach einem der vorhergehenden Ansprüche, bei der die Einschnürung (12) unsymmetrisch ausgebildet ist.

4. Bohrschraube nach einem der vorhergehenden Ansprüche, bei der der radiale Abstand der Gewindekante (10) von der Längsachse der Schraube am Beginn des Gewindes (6) kleiner als oder gleich wie der Durchmesser des von der Bohrspitze (7) zu erzeugenden Lochs ist.

5. Bohrschraube nach einem der vorhergehenden Ansprüche, bei der die Freifläche (9) vor der Schneide (8) von der Bohrspitze (7) bis in den Bereich der Einschnürung (12) reicht.

6. Bohrschraube nach einem der vorhergehenden Ansprüche, bei der die Freifläche (9) vor der Schneide (8) der Bohrspitze (7) in einer Längsmittelebene der Schraube liegt.

7. Bohrschraube nach einem der vorhergehenden Ansprüche, mit einem als Senkkopf (2) ausgebildetem Schraubenkopf.

## Claims

1. A drilling screw for wood or wood-type material, comprising
1.1 a screw shank (1),
1.2 a drill bit (7), configured on the front end of the screw shank (1) and having two cutting edges (8) located at least approximately on a line in the frontal view,
1.3 a constriction (12) configured behind the drill bit (7),
1.4 a screw thread (6), which
1.5 begins at an axial distance behind the cutting edges (8), and
1.9 in which the radial distance of the thread edge (10) from the longitudinal axis of the screw increases over one half to two windings from a beginning of the thread (6), wherein
1.10 in the constriction (12) the diameter of the screw is smaller than the hole formed by the drill bit (7) and smaller than the core diameter of the screw shank (1), and
1.11 the outer diameter of the drill bit (7) corresponds to the core diameter of the screw thread (6).

2. The drilling screw according to claim 1, wherein the thread (6) begins within the constriction (12).

3. The drilling screw according to any of the preceding claims, wherein the constriction (12) is of non-symmetrical configuration.

4. The drilling screw according to any of the preceding claims, wherein the radial distance of the thread edge (10) from the longitudinal axis of the screw at the beginning of the thread (6) is smaller or equal to the diameter of the hole to be produced by the drill bit (7).

5. The drilling screw according to any of the preceding claims, wherein the flank (9) in front of the cutting edge (8) reaches from the drill bit (7) into the region of the constriction (12).

6. The drilling screw according to any of the preceding claims, wherein the flank (9) in front of the cutting edge (8) of the drill bit (7) lies in a longitudinal center plane of the screw.

7. The drilling screw according to any of the preceding claims, comprising a screw head configured as a countersunk head (2).

## Revendications

1. Vis perceuse pour bois ou matériel similaire au bois, comprenant
1.1 une tige de vis (1),
1.2 une pointe de forage (7) configurée sur l'extrémité avant de la tige de vis (1) avec deux tranchants (8) situés au moins approximativement sur une ligne en vue frontale,
1.3 une constriction (12) configurée derrière la pointe de forage (7),
1.4 un filetage de vis (6) qui
1.5 commence derrière les tranchants (8) avec une distance axiale et
1.9 dans lequel la distance radiale d'un bord de filetage (10) de l'axe longitudinal de la vis augmente à partir d'un début du filetage (6) à travers une demi à deux spires, dans laquelle
1.10 le diamètre de la vis dans la constriction (12) est plus inférieur que le trou formé par la pointe de forage (7) et plus inférieur que le diamètre du coeur de la tige de vis (1) et
1.11 le diamètre extérieur de la pointe de forage (7) correspond au diamètre du coeur du filetage de vis (6).

2. Vis perceuse selon la revendication 1, dans laquelle le filetage (6) commence dans la constriction (12).

3. Vis perceuse selon l'une quelconque des revendications précédentes, dans laquelle la constriction (12) présente une configuration asymétrique.

4. Vis perceuse selon l'une quelconque des revendications précédentes, dans laquelle la distance radiale du bord de filetage (10) de l'axe longitudinal de la vis au début du filetage (6) est plus inférieur ou égal au diamètre du trou à produire par la pointe de forage (7).

5. Vis perceuse selon l'une quelconque des revendications précédentes, dans laquelle le flanc (9) devant le tranchant (8) s'étend de la pointe de forage (7) jusqu'à la zone de constriction (12).

6. Vis perceuse selon l'une quelconque des revendications précédentes, dans laquelle le flanc (9) devant le tranchant (8) est situé dans un plan longitudinal médian de la vis.

7. Vis perceuse selon l'une quelconque des revendications précédentes, comprenant une tête de vis conçue sous forme de tête fraisée (2).
